# EUROPEAN PATENT APPLICATION

(11) **EP 3 184 393 A1**
(43) Date of publication of application: **28.06.2017**
(21) Application number: 15834135.4
(22) Date of filing: 08.06.2015
(51) Int. Cl.: B60W 30/14, B60W 30/08, B60W 30/10, B60W 40/12, G01C 21/26

(54) **TRAVEL INSTRUCTION INFORMATION GENERATION DEVICE, VEHICLE, AND TRAVEL INSTRUCTION INFORMATION GENERATION METHOD**

(30) Priority: 21.08.2014 JP 2014168155
(71) Applicant: Panasonic Intellectual Property Management Co., Ltd., Osaka-shi, Osaka 540-6207 (JP)
(72) Inventor: NAKAYA, Satoshi, Osaka-shi, Osaka 540-6207 (JP); YOSHIDA, Takashi, Osaka-shi, Osaka 540-6207 (JP); KAWAHARA, Hiroki, Osaka-shi, Osaka 540-6207 (JP); MATSUMOTO, Takenori, Osaka-shi, Osaka 540-6207 (JP)
(74) Representative: Schwabe - Sandmair - Marx
(86) International application number: PCT/JP2015/002854
(87) International publication number: WO 2016/027393

(57) **Abstract**

A travel instruction information generation device has a vehicle information acquisition unit, a travel instruction information generator, and a correction information generator. The vehicle information acquisition unit acquires vehicle information representing a specific state of a vehicle. The travel instruction information generator generates travel instruction information with which the vehicle performs self-driving by using three-dimensional map information. The correction information generator generates, on the basis of the vehicle information, correction information for correcting the travel instruction information.

## Description

### TECHNICAL FIELD

The present invention relates to a travel instruction information generation device which generates travel instruction information to be used to perform self-driving of a vehicle, relates to a vehicle using the device, and relates to a travel instruction information generation method.

### BACKGROUND ART

In recent years, vehicles have been developed which self-drive while sensing the periphery of an own vehicle with various sensors such as a camera and a laser radar mounted on the vehicle.

In order to enable a function of the self-driving, three-dimensional map information having accurate road information is necessary. The accurate road information is three-dimensional information including, for example, not only road widths, lanes, detailed position information of signs, and the like but also information of inclinations of roads, unevenness of roads, unevenness of shoulders, and the like.

By using the three-dimensional map information, travel instruction information is generated with which a vehicle automatically travel to a destination. The vehicle is able to automatically travel to a destination by adding, on the basis of the travel instruction information, real-time three-dimensional information in the periphery of the vehicle detected by various sensors mounted on the vehicle (for example, PTL 1).

Further, there is a travel track generation device. In the travel track generation device, an evaluation function is generated which includes a term for evaluating an acceleration and a jerk, based on a position determined on the basis of a seating position of an occupant and/or a degree of priority of ride comfort of an occupant. In addition, in the travel track generation device, a travel track is calculated by convergence calculation of the evaluation function in a state that a constraint condition based on road boundary lines is satisfied. This device can improve ride comfort of a person on a vehicle (for example, PTL 2).

### Citation List

### Patent Literature

PTL 1: Unexamined Japanese Patent Publication No. 2009-199572
PTL 2: Unexamined Japanese Patent Publication No. 2009-137410

### SUMMARY OF THE INVENTION

The present invention provides a travel instruction information generation device which can improve ride comfort for individual vehicles when self-driving is being performed.

A travel instruction information generation device according to an aspect of the present invention includes a vehicle information acquisition unit, a travel instruction information generator, and a correction information generator. The vehicle information acquisition unit acquires vehicle information representing a specific state of a vehicle. The travel instruction information generator generates travel instruction information with which a vehicle performs self-driving by using three-dimensional map information. The correction information generator generates, on the basis of the vehicle information, correction information for correcting the travel instruction information.

In the present invention, correction information for correcting travel instruction information is generated on the basis of vehicle information representing a specific state of a vehicle. This arrangement makes it possible to improve ride comfort for individual vehicles when self-driving is being performed.

### BRIEF DESCRIPTION OF DRAWINGS

FIG. 1 is a block diagram showing a travel instruction information generation device and a peripheral configuration according to a first exemplary embodiment of the present invention;
FIG. 2 is a flowchart showing an operation example of the travel instruction information generation device according to the first exemplary embodiment of the present invention;
FIG. 3 is a block diagram showing a travel instruction information generation device and a peripheral configuration according to a second exemplary embodiment of the present invention; and
FIG. 4 is a flowchart showing an operation example of the travel instruction information generation device according to the second exemplary embodiment of the present invention.

### DESCRIPTION OF EMBODIMENTS

Before an exemplary embodiment of the present invention is described, problems of conventional travel instruction information generation devices will be descried. With a technology described in PTL 1, it is possible for a vehicle to automatically reach a destination according to travel instruction information. The travel instruction information is generated so that the vehicle travels at a predetermined lane position such as a center of a lane, for example.

On the other hand, individual vehicles have different vehicle states such as air pressures of tires, a state of suspension, an occupant number, a seating position of an occupant, a balance depending on luggage, and a gross weight. Because there are inclinations and undulations on an actual road, the difference in a vehicle state makes a difference in ride comfort.

Thus, with the technology described in PTL 1, bad ride comfort can occur with some vehicle when self-driving is actually performed, because the travel instruction information is generated without taking the difference in a vehicle state into consideration.

The technology described in PTL 2 can improve ride comfort, but the technology does not take any consideration into improvement of ride comfort at the time of self-driving.

Hereinafter, an exemplary embodiment of the present invention will be described in detail with reference to the drawings. Note that, hereinafter, the same elements are assigned the same reference marks in all the drawings for showing respective exemplary embodiments and are not described again.

### FIRST EXEMPLARY EMBODIMENT

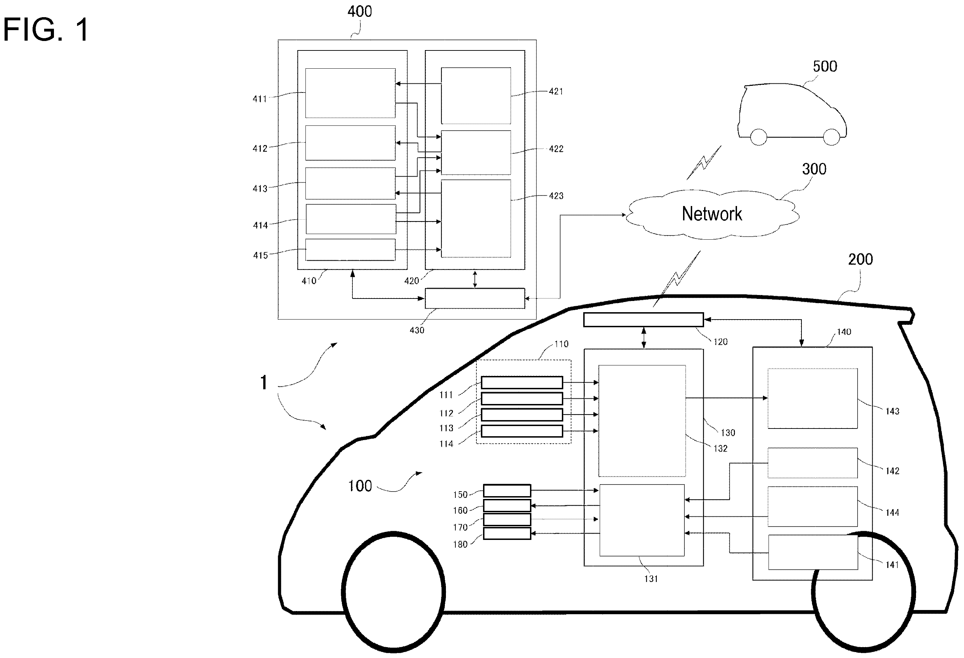

Hereinafter, a first exemplary embodiment of the present invention will be described in detail with reference to FIG. 1 to FIG. 2. First, with reference to FIG. 1, a travel instruction information generation device and a peripheral configuration will be described.

### [Configuration of Travel Instruction Information Generation Device]

Travel instruction information generation device 1 according to the present exemplary embodiment is configured with self-driving support server 400 and vehicle-mounted device 100. Vehicle-mounted device 100 is a device mounted on vehicle 200, and self-driving support server 400 is a computer installed outside vehicle 200.

Vehicle-mounted device 100 and self-driving support server 400 can communicate totally through network 300. Self-driving support server 400 can mutually communicate with vehicles other than vehicle 200 such as another vehicle 500 in FIG. 1

Network 300 typically uses wireless communication; however, wired communication can be used, for example, when communication is performed through a charging cable, which is a wire, during charge of an electric vehicle or the like. Next, detailed configurations of vehicle-mounted device 100 and self-driving support server 400 will be described.

Vehicle-mounted device 100 includes detector 110, vehicle-side communication unit 120, vehicle-side controller 130, vehicle-side information storage 140, GPS receiver 150, notification unit 160, operation unit 170, and drive unit 180.

Detector 110 detects information representing a specific state of vehicle 200 (hereinafter, referred to as vehicle information). The vehicle information is information which represents a state specific to vehicle 200 and which represents that vehicle 200 is in a state different from other vehicles, for example, a change in a suspension due to a long time use of vehicle 200, a change in a vehicle weight due to loading of an occupant or luggage, and other changes.

For example, the vehicle information includes an elastic modulus of a spring of a suspension of vehicle 200 and a damping factor of a damper of the suspension. Further, the vehicle information may include at least one of an occupant number of vehicle 200 and a seating position of an occupant on vehicle 200. Further, the vehicle information may include at least one of a vehicle width of vehicle 200 and a vehicle height of vehicle 200. The vehicle information may include an air pressure of a tire of vehicle 200 and a weight of vehicle 200. Note that the vehicle width is a length in a direction perpendicular to a traveling direction of vehicle 200.

Detector 110 includes suspension information acquisition unit 111, tire air pressure acquisition unit 112, occupant information acquisition unit 113, and vehicle weight and vehicle height acquisition unit 114. A result detected by detector 110 is transmitted to vehicle information acquisition unit 132, and vehicle information is extracted from the result and then stored in vehicle information storage 143.

Suspension information acquisition unit 111 acquires an elastic modulus of the spring of the suspension of vehicle 200 and a damping factor of the damper of the suspension. For example, suspension information acquisition unit 111 detects the above coefficient by detecting a damper stroke amount and a stroke speed with an acceleration sensor or the like.

Tire air pressure acquisition unit 112 detects an air pressure of a tire of vehicle 200.

Occupant information acquisition unit 113 detects at least one of an occupant number and a seating position of an occupant. Examples of occupant information acquisition unit 113 include sensors mounted on respective seats to detect presence or absence of an occupant.

Vehicle weight and vehicle height acquisition unit 114 detects at least one of a weight of vehicle 200 and a vehicle height of vehicle 200. An example of vehicle weight and vehicle height acquisition unit 114 detects the vehicle weight and the vehicle height on the basis of a sinking amount of the suspension.

The vehicle width of vehicle 200 and the vehicle length of vehicle 200 are previously stored in vehicle information storage 143 because neither the width nor the height does not substantially change due to use of vehicle 200. Note that the vehicle length is a length in a traveling direction of vehicle 200.

Note that the vehicle information stored in vehicle information storage 143 is preferably the latest information when detector 110 detects the vehicle information. By using the latest vehicle information, the ride comfort can be optimally improved. Note that detector 110 can include a sensor other than the ones described above.

Vehicle-side communication unit 120 transmits and receives various pieces of information to and from self-driving support server 400 through network 300. Vehicle-side communication unit 120 performs communication through, for example, wireless communication using a mobile telephone line. Vehicle-side communication unit 120 is controlled by vehicle-side controller 130.

Vehicle-side controller 130 is a processing unit including, for example, a CPU (central processing unit) and a RAM (Random Access Memory) and is configured to transmit and receive information and to control the respective units. Vehicle-side controller 130 is connected to detector 110, vehicle-side communication unit 120, vehicle-side information storage 140, GPS receiver 150, notification unit 160, operation unit 170, and drive unit 180.

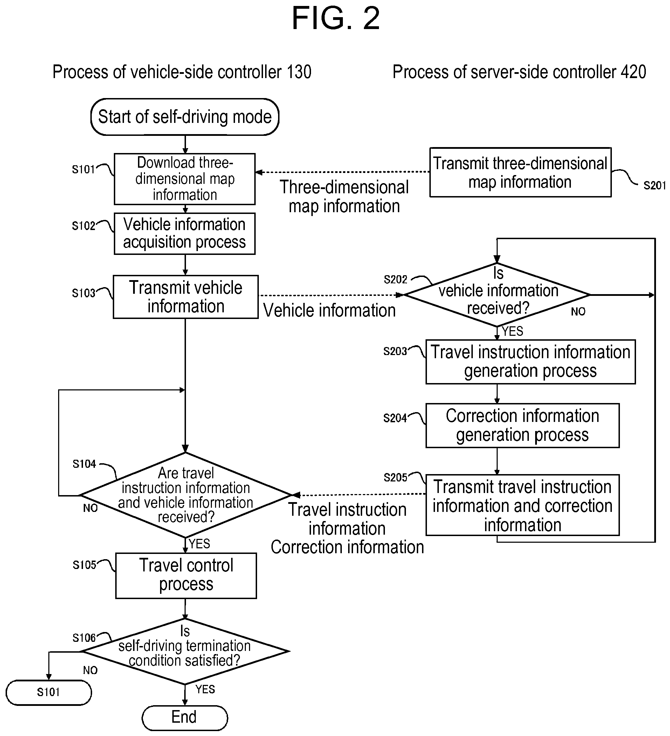

Specifically, vehicle-side controller 130 is configured with travel controller 131 and vehicle information acquisition unit 132. A function of each unit equipped on vehicle-side controller 130 will be described in detail later with reference to FIG. 2.

Vehicle-side information storage 140 is configured with a device such as a hard disk or a RAM which can store information. Various pieces of information can be written in and read out from vehicle-side information storage 140 being controlled by vehicle-side controller 130.

Being controlled by vehicle-side controller 130, vehicle-side information storage 140 and vehicle-side communication unit 120 can also mutually transmit and receive information.

Specifically, vehicle-side information storage 140 includes correction information storage 141, three-dimensional map information storage 142, vehicle information storage 143, and travel instruction information storage 144.

Vehicle-side information storage 140 may be configured with a single storage device or a plurality of storage devices. Various pieces of information stored in vehicle-side information storage 140 will be described later in detail with reference to FIG. 2.

GPS receiver 150 receives signals from a plurality of GPS (Global Positioning System) satellites and acquires position information indicating the current position of vehicle 200 by demodulating the received signals. GPS receiver 150 outputs the acquired position information to vehicle-side controller 130.

Notification unit 160 is a display, a speaker, or an actuator, and notifies a driver of various pieces of information with at least one of sound, light, and vibration. Notification unit 160 is controlled by vehicle-side controller 130.

Operation unit 170 is a device such as a switch or a touch panel which can be operated by a user. A driver as a user can perform various settings about self-driving by operating operation unit 170. Here, the term "self-driving" means a function which automatically drives a vehicle to a destination and means whole of a function which automatically moves a vehicle by means other than a driving operation by a driver.

Drive unit 180 generates driving force to turn wheels of the vehicle. Drive unit 180 is, for example, an electric motor or an engine of various types. At the time of manual driving, drive unit 180 is controlled depending on an acceleration/deceleration operation of a driver. On the other hand, when self-driving is being performed, drive unit 180 is controlled directly by travel controller 131.

### [Configuration of Self-Driving Support Server]

Next, a configuration of self-driving support server 400 will be described in detail. Self-driving support server 400 is a computer having a CPU (Central Processing Unit) functioning as a processing unit, a RAM and a hard disk functioning as server-side information storage 410, a communication device, a display or a printer functioning as an information output unit, an input device to input an operation instruction of an operator, and other components.

Self-driving support server 400 includes server-side information storage 410, server-side controller 420, and server-side communication unit 430. Next, a description will be given on detailed configurations of server-side information storage 410, server-side controller 420, and server-side communication unit 430.

Server-side information storage 410 is configured with a device such as a hard disk or a RAM which can store information. Various pieces of information can be written in and read out from server-side information storage 410 being controlled by server-side controller 420.

Being controlled by server-side controller 420, server-side information storage 410 and server-side communication unit 430 can also mutually transmit and receive information.

Specifically, server-side information storage 410 includes vehicle information storage 411, correction information storage 412, travel instruction information storage 413, three-dimensional map information storage 414, and destination information storage 415.

Server-side information storage 410 may be configured with a single storage device or a plurality of storage devices. The various types of information stored in server-side information storage 410 will be described later in detail with reference to FIG. 2.

Server-side controller 420 is a processing unit including, for example, a CPU (Central Processing Unit) and RAM and is configured to transmit and receive information and to control the respective units. Server-side controller 420 is connected to server-side information storage 410 and server-side communication unit 430.

Specifically, server-side controller 420 is configured with vehicle information acquisition unit 421, correction information generator 422, and travel instruction information generator 423. Functions of the respective units of server-side controller 420 will be described later in detail with reference to FIG. 2.

Server-side communication unit 430 transmits and receives various pieces of information to and from vehicle 200 through network 300. Server-side communication unit 430 performs communication in a similar way to vehicle-side communication unit 120 through, for example, wireless communication using a mobile telephone line. Server-side communication unit 430 is controlled by server-side controller 420. Server-side communication unit 430 can also communicate with another vehicle (for example, vehicle 500) other than vehicle 200.

### [Operations of Vehicle-Mounted Device and Self-Driving Support Server]

FIG. 2 is a flowchart showing an operation example of the vehicle-mounted device and the self-driving support server of the first exemplary embodiment according to the present invention. Specifically, the process shown in FIG. 2 is performed by vehicle-side controller 130 and server-side controller 420. Steps S101 to S105 represent a processing operation of vehicle-side controller 130. Further, steps S201 to S205 represent a processing operation of server-side controller 420.

Travel instruction information generation device 1 has vehicle information acquisition unit 132 which acquires vehicle information representing a specific state of vehicle 200, travel instruction information generator 423 which generates travel instruction information with which vehicle 200 performs self-driving by using three-dimensional map information, and correction information generator 422 which generates, on the basis of the vehicle information, correction information for correcting the travel instruction information.

Vehicle 200 has vehicle-side information storage 140 and travel controller 131. Vehicle-side information storage 140 stores the travel instruction information generated by travel instruction information generator 423 and the correction information generated by correction information generator 422. Travel controller 131 controls traveling of vehicle 200 on the basis of the travel instruction information and the correction information stored in vehicle-side information storage 140. Hereinafter, an operation example will be described in detail.

First, if a self-driving mode is started by a user operation or the like of operation unit 170, vehicle-side controller 130 downloads three-dimensional map information (step S101).

Upon receiving an instruction for downloading, server-side controller 420 performs control such that the three-dimensional map information stored in three-dimensional map information storage 414 is transmitted from server-side communication unit 430 (step S201). The three-dimensional map information received by vehicle-mounted device 100 is stored in three-dimensional map information storage 142.

Here, the three-dimensional map information stored in three-dimensional map information storage 414 is information generated on the basis of the result of measurement conducted by a surveying vehicle exclusive for generation of three-dimensional map information.

The three-dimensional map information is information corresponding to position information. The three-dimensional map information includes as accurate road information three-dimensional information including, for example, not only road widths, lanes, detailed position information of signs, and the like but also information of inclinations of roads, unevenness of roads, unevenness of shoulders, and the like.

Subsequent to step S101, vehicle information acquisition unit 132 acquires vehicle information on the basis of a detection result of detector 110 and stores the detection result in vehicle information storage 143 (step S102).

Subsequent to step S102, vehicle-side communication unit 120 transmits the vehicle information stored in vehicle information storage 143 to self-driving support server 400 (step S103). Upon receiving the vehicle information (step S202: YES), vehicle information acquisition unit 421 of server-side controller 420 stores the received vehicle information in vehicle information storage 411. If the vehicle information is not received (step S202: NO), server-side controller 420 performs step S202 again.

If the vehicle information is received (step S202: YES), travel instruction information generator 423 generates travel instruction information for vehicle 200 to perform self-driving, on the basis of the three-dimensional map information stored in three-dimensional map information storage 414 and destination information stored in destination information storage 415.

The destination information is information including the position information of a destination to which vehicle 200 is headed, and the destination information is received from vehicle 200 and is then stored.

Specifically, travel instruction information generator 423 calculates a detailed lane position, a speed, an acceleration, and the like to generate the travel instruction information for vehicle 200 to automatically travel to the destination. The calculated travel instruction information is stored in travel instruction information storage 413 (step S203).

Subsequent to step S203, on the basis of the vehicle information stored in vehicle information storage 411, correction information generator 422 generates correction information for correcting the travel instruction information stored in travel instruction information storage 413 so that ride comfort is improved (step S204). A description will be given on how to correct, later. When generating the correction information, correction information generator 422 takes the three-dimensional map information stored in three-dimensional map information storage 414 into consideration. Correction information generator 422 stores the generated correction information in correction information storage 412.

Subsequent to step S204, server-side controller 420 transmits the travel instruction information and the correction information to vehicle 200 (step S205). If the travel instruction information and the correction information are received (step S104: YES), vehicle-side controller 130 stores the travel instruction information in travel instruction information storage 144 and the correction information in correction information storage 141. If the travel instruction information is not received (step S104: NO), vehicle-side controller 130 performs step S104 again. After finishing step S205, server-side controller 420 returns the process to step S202 again.

If the travel instruction information is received (step S104: YES), travel controller 131 controls the travelling of vehicle 200 on the basis of the travel instruction information stored in travel instruction information storage 144 (step S105). Specifically, travel controller 131 performs control drive unit 180 so that the vehicle automatically drives, on the basis of the travel instruction information corresponding to the position information acquired by GPS receiver 150. While performing self-driving, travel controller 131 notifies from notification unit 160 that self-driving is being performed.

If a self-driving termination condition is satisfied (step S106: YES), travel controller 131 finishes the process (END in FIG. 2). The self-driving termination condition is an occasion that vehicle 200 has reached the destination or some event has happened to interrupt self-driving.

If the self-driving termination condition is not satisfied (step S106: NO), vehicle-side controller 130 returns the process to step S101 while continuing to perform self-driving.

Note that, after the process is finished (END in FIG. 2), if vehicle-side controller 130 starts self-driving again on response to a user operation of operation unit 170 or the like, the process can be started again (START of self-driving mode in FIG. 2).

By controlling the traveling of the vehicle on the basis of the travel instruction information and the correction information, the ride comfort can be improved for individual vehicles at the time of self-driving.

A description will be given on a case that the vehicle information includes an elastic modulus of the spring of the suspension and a damping factor of the damper. In a case that a damper stroke amount or a stroke speed of the suspension is large, the travel instruction information is corrected so that an orifice diameter of a damper piston or the like is changed so as to lower damping force and well absorb a shock; thus, the ride comfort can be improved.

Further, in a case that the damper stroke amount or the stroke speed is large, the travel instruction information is corrected so that the vehicle travels at a lower speed; thus, the ride comfort can be improved. To the contrary, in a case that the damper stroke amount or the stroke speed is small, the travel instruction information is corrected so that the damper has a greater damping force; thus, the ride comfort can be improved.

A description will be given on a case that the vehicle information includes at least an occupant number of vehicle 200 and seating positions of occupants on vehicle 200.

A gross weight of the vehicle increases with the occupant number. For example, the ride comfort can be improved by starting deceleration before an intersection sooner for a larger occupant number.

Further, a center of gravity of the vehicle changes depending on a change in seating positions of occupants. For example, the ride comfort can be improved by correcting an approach angle or an approach speed at the time of approaching a curved road, on the basis of the seating positions of the occupants.

A description will be given on a case that the vehicle information includes at least one of the vehicle width, the vehicle length, and the vehicle height of vehicle 200. In the case of self-driving, the travel instruction information is basically generated so that the vehicle travels at the center of a lane; however, actual roads have inclinations in a vehicle width direction or a vehicle length direction. By correcting the travel instruction information so as to cause the vehicle to travel within the lane on a traveling line having a small inclination while considering the inclinations, the vehicle width, and the vehicle length, the ride comfort can be improved.

A description will be given on a case that the vehicle information includes the vehicle height of vehicle 200. If the vehicle height changes, air resistance at the time of traveling changes. By correcting the speed and the acceleration, of the vehicle, included in the travel instruction information while considering the change in air resistance, the ride comfort can be improved.

A description will be given on a case that the vehicle information includes the air pressure of the tire of vehicle 200. The ride comfort of the occupant changes depending on the air pressure. In view of this fact, by correcting the travel instruction information on the basis of the air pressure of the tire, the ride comfort can be improved.

A description will be given on a case that the vehicle information includes the weight of the vehicle 200. When the weight of the vehicle increases, the ride comfort decreases at the time of rapid deceleration. To address this issue, for example, by making a correction such that deceleration is started sooner before an intersection for a heavier weight of the vehicle, the ride comfort can be improved.

Further, by acquiring information from each of a plurality of the suspensions, a weight balance of the vehicle can be detected. By correcting the travel instruction information on the basis of this vehicle information, the ride comfort can be improved. For example, by storing as the vehicle information the weight balance of the vehicle when neither luggage nor other things are on board and by comparing the currently acquired weight balance and the stored vehicle information, the weight balance of the vehicle can be accurately detected.

### [Advantageous Effect of the Present Exemplary Embodiment]

A travel instruction information generation device in the first exemplary embodiment provides an advantageous effect that ride comfort can be improved for individual vehicles at the time of self-driving, by generating correction information for correcting travel instruction information on the basis of vehicle information representing a specific state of each of the individual vehicles.

### SECOND EXEMPLARY EMBODIMENT

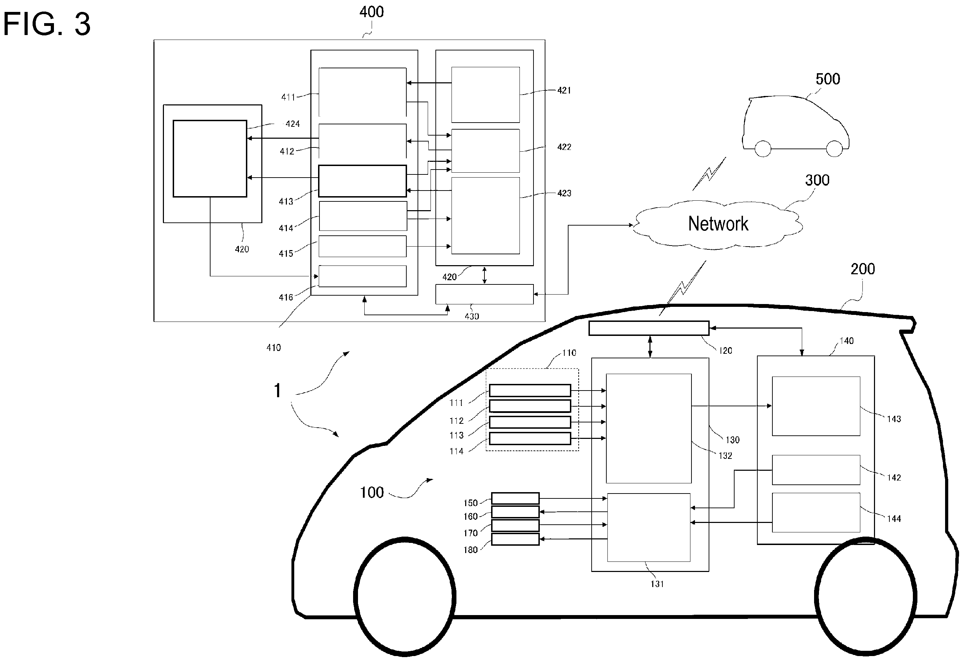

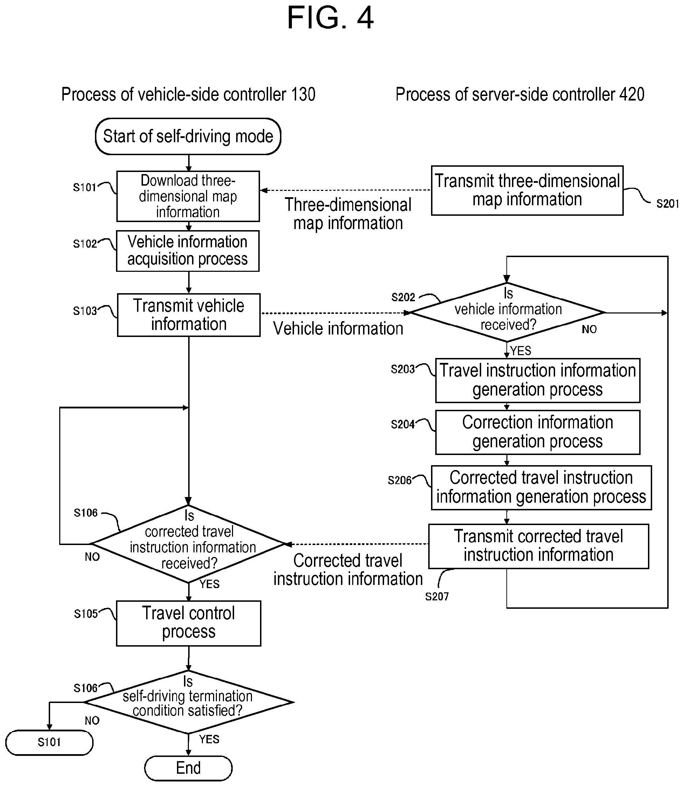

Hereinafter, a second exemplary embodiment of the present invention will be described with reference to FIG. 3 and FIG. 4. FIG. 3 is a block diagram showing a travel instruction information generation device and a peripheral configuration according to the present exemplary embodiment. FIG. 4 is a flowchart showing an operation example of the travel instruction information generation device according to the present exemplary embodiment. Components having similar configurations to the first exemplary embodiment are assigned the same reference marks and not described again, but the differences are described in detail.

In the first exemplary embodiment, the correction information stored in correction information storage 412 and the travel instruction information stored in travel instruction information storage 413 are transmitted from self-driving support server 400 to vehicle-mounted device 100. Then, vehicle-mounted device 100 corrects the travel instruction information by using the correction information and performs self-driving.

In contrast, in the present exemplary embodiment, the corrected travel instruction information is generated, in self-driving support server 400, by correcting the travel instruction information using the correction information, and the corrected travel instruction information is transmitted to vehicle 200. This is the different point.

As shown in FIG. 2 and FIG. 3, self-driving support server 400 has corrected travel instruction information generator 424. Corrected travel instruction information generator 424 generates corrected travel instruction information by correcting the travel instruction information stored in travel instruction information storage 413 using the correction information stored in correction information storage 412 (S206). Corrected travel instruction information generator 424 stores the generated corrected travel instruction information in corrected travel instruction information storage 416.

Server-side communication unit 430 transmits the corrected travel instruction information stored in corrected travel instruction information storage 416 to vehicle-mounted device 100 (step S207). Upon receiving the corrected travel instruction information (step S106: YES), vehicle-mounted device 100 stores the corrected travel instruction information in travel instruction information storage 144.

Travel controller 131 controls traveling of vehicle 200 on the basis of the corrected travel instruction information stored in travel instruction information storage 144.

### [Advantageous Effect of the Present Exemplary Embodiment]

The travel instruction information generation device in the second exemplary embodiment does not need a correction process on the vehicle side because the corrected travel instruction information is transmitted to the vehicle. With the above operation, the vehicle only has to perform self-driving according to the transmitted travel instruction information, and there is further provided an advantageous effect that the process on the vehicle-side controller can thus be reduced.

### [Modified Example Common to the Above Exemplary Embodiments]

In the first and second exemplary embodiments, the function of travel controller 131 and the function of server-side controller 420 can be appropriately exchanged.

For example, it is possible that the three-dimensional map information is stored in self-driving support server 400 and that vehicle-side controller 130 performs the functions of vehicle information acquisition unit 421, correction information generator 422, and travel instruction information generator 423 which are equipped in server-side controller 420. The functions can be shared appropriately depending on the processing load, the communication speed, or the like.

Note that because the vehicle information of vehicle 200 is stored in self-driving support server 400, this information can be used to improve the ride comfort, at the time of self-driving, of another vehicle other than vehicle 200 (for example, vehicle 500). In a case that a vehicle model of another vehicle 500 is the same as or a similar to the vehicle model of vehicle 200, it is possible to use the correction information generated on the basis of the vehicle information of vehicle 200 as the correction information of the another vehicle 500 without any modification. This method can reduce the processing load of self-driving support server 400.

### INDUSTRIAL APPLICABILITY

The present invention is preferable for a travel instruction information generation device and the like which generate travel instruction information to be used to perform self-driving of a vehicle.

### REFERENCE MARKS IN THE DRAWINGS

- 1: travel instruction information generation device
- 100: vehicle-mounted device
- 110: detector
- 111: suspension information acquisition unit
- 112: tire air pressure acquisition unit
- 113: occupant information acquisition unit
- 114: vehicle weight and vehicle height acquisition unit
- 120: vehicle-side communication unit
- 130: vehicle-side controller
- 131: travel controller
- 132: vehicle information acquisition unit
- 140: vehicle-side information storage (information storage)
- 141: correction information storage
- 142: three-dimensional map information storage
- 143: vehicle information storage
- 144: travel instruction information storage
- 150: GPS receiver (current position acquisition unit)
- 160: notification unit
- 170: operation unit
- 180: drive unit
- 200: vehicle
- 300: network
- 400: self-driving support server
- 410: server-side information storage (information storage)
- 411: vehicle information storage
- 412: correction information storage
- 413: travel instruction information storage
- 414: three-dimensional map information storage
- 415: destination information storage
- 416: corrected travel instruction information storage
- 420: server-side controller
- 421: vehicle information acquisition unit
- 422: correction information generator
- 423: travel instruction information generator
- 424: corrected travel instruction information generator
- 430: server-side communication unit
- 500: another vehicle

## Claims

1. A travel instruction information generation device comprising:
a vehicle information acquisition unit which acquires vehicle information representing a specific state of a vehicle;
a travel instruction information generator which generates travel instruction information with which the vehicle performs self-driving by using three-dimensional map information; and
a correction information generator which generates, based on the vehicle information, correction information for correcting the travel instruction information.

2. The travel instruction information generation device according to claim 1, wherein the vehicle information includes an elastic modulus of a spring of a suspension of the vehicle and a damping factor of a damper of the suspension.

3. The travel instruction information generation device according to claim 1, wherein the vehicle information includes an air pressure of a tire of the vehicle.

4. The travel instruction information generation device according to claim 1, wherein the vehicle information includes at least one of an occupant number of the vehicle and a seating position of an occupant on the vehicle.

5. The travel instruction information generation device according to claim 1, wherein the vehicle information includes at least one of a vehicle width of the vehicle, a vehicle length of the vehicle, and a vehicle height of the vehicle.

6. The travel instruction information generation device according to claim 1, wherein the vehicle information includes a weight of the vehicle.

7. The travel instruction information generation device according to any one of claims 1 to 6, further comprising an information storage which stores the three-dimensional map information.

8. The travel instruction information generation device according to any one of claims 1 to 6, further comprising
a corrected travel instruction information generator which generates corrected travel instruction information in which the travel instruction information is corrected by using the correction information.

9. A vehicle comprising:
the travel instruction information generation device according to claim 1;
an information storage which stores the travel instruction information generated by the travel instruction information generator of the travel instruction information generation device and stores the correction information generated by the correction information generator; and
a travel controller which controls traveling of the vehicle, based on the travel instruction information stored in the information storage and the correction information.

10. A vehicle comprising:
the travel instruction information generation device according to claim 1;
an information storage; and
a travel controller,
wherein
the travel instruction information generation device further includes a corrected travel instruction information generator which generates corrected travel instruction information in which the travel instruction information is corrected by using the correction information,
the information storage stores the corrected travel instruction information generated by the corrected travel instruction information generator, and
the travel controller controls traveling of the vehicle, based on the corrected travel instruction information stored in the information storage.

11. A travel instruction information generation method comprising:
a vehicle information acquiring step for acquiring vehicle information representing a specific state a vehicle;
a travel instruction information generation step for generating travel instruction information with which the vehicle performs self-driving by using three-dimensional map information; and
a correction information generation step for generating, based on the vehicle information, correction information for correcting the travel instruction information.

12. The travel instruction information generation method according to claim 11, wherein the vehicle information includes an elastic modulus of a spring of a suspension of the vehicle and a damping factor of a damper of the suspension.

13. The travel instruction information generation method according to claim 11, wherein the vehicle information includes at least one of an occupant number of the vehicle and a seating position of an occupant on the vehicle.

14. The travel instruction information generation method according to claim 11, wherein the vehicle information includes at least one of an air pressure of a tire of the vehicle, a vehicle width of the vehicle, a weight of the vehicle, and a vehicle height of the vehicle.

15. The travel instruction information generation method according to any one of claims 11 to 14, further comprising a travel control step for controlling traveling of the vehicle, based on the travel instruction information and the correction information.
